# EUROPÄISCHE PATENTSCHRIFT

(11) **EP 3 814 219 B1**
(45) Veröffentlichungstag und Bekanntmachung des Hinweises auf die Patenterteilung: **23.03.2022**
(21) Anmeldenummer: 19745109.9
(22) Anmeldetag: 24.07.2019
(51) Int. Cl.: B64C 29/02, B64C 39/04

(54) **LUFTFAHRZEUG UND VERFAHREN ZUM BETREIBEN EINES LUFTFAHRZEUGS**
AIRCRAFT AND METHOD FOR OPERATING AN AIRCRAFT
AÉRONEF ET PROCÉDÉ D'EXPLOITATION D'UN VÉHICULE AÉRIEN

(30) Priorität: 27.07.2018 DE 102018212611
(43) Veröffentlichungstag der Anmeldung: 05.05.2021
(73) Patentinhaber: Silentwings GmbH, 81249 München (DE)
(72) Erfinder: MÄNDL, Stefan, 80339 München (DE)
(74) Vertreter: Linsmeier, Josef
(86) Internationale Anmeldenummer: PCT/EP2019/069884
(87) Internationale Veröffentlichungsnummer: WO 2020/020930

(56) Entgegenhaltungen:
- CN-A- 106 904 271
- DE-A1- 1 406 498
- US-A- 5 769 359
- US-A1- 2012 043 413
- US-A1- 2017 369 162
- US-B1- 9 550 567

## Beschreibung

Die Erfindung betrifft ein Luftfahrzeug und ein Verfahren zum Betreiben eines Luftfahrzeugs.

Unbemannte Luftfahrzeuge, welche auch als Unmanned Aerial Vehicle (UAV), Unmanned Aircraft (UA), Unmanned Aircraft System (UAS) oder umgangssprachlich auch als Drohnen bezeichnet werden, werden je nach Leistungsfähigkeit und Ausstattung für unterschiedliche Zwecke eingesetzt, beispielsweise zum Transport von Frachtgut oder zu Kontroll- und Überwachungszwecken mittels integrierter Kameras und/oder Sensoren. Je nach Einsatzgebiet werden dabei unterschiedliche Anforderungen an den Steigflug bzw. das Abheben, den Sinkflug bzw. das Landen und/oder den Vorwärtsflug bzw. den Übergang zwischen diesen Flugarten gestellt.

US 5,769,359 offenbart ein Flugzeugsteuersystem zum Steuern eines Flugzeugs in Niedriggeschwindigkeits- oder Schwebezuständen. Ein Luftgeschwindigkeitssensor misst die Luftgeschwindigkeit des Flugzeugs und gibt ein Luftgeschwindigkeitssignal an einen Steuerprozessor aus, der das Luftgeschwindigkeitssignal mit einem Geschwindigkeitssteuereingangssignal verarbeitet. Ein Steueraktuator betätigt eine Flugzeugsteuerfläche in Reaktion auf das Steuerflächensteuersignal. Die Flugzeugsteuerfläche kann einen Steuermast umfassen, der schwenkbar an einem Rumpf des Flugzeugs angebracht ist, oder eine Trimmklappe, die schwenkbar an einem Rumpf des Flugzeugs angebracht ist.

CN106904271 A offenbart einen am Heck einer vertikalen Start- und Landedrohne, die zwei Flugmodi für vertikales Starten und Landen sowie für effizientes Reisen aufweist, vorgesehenen Mechanismus mit einem Antrieb für eine synchrone Drehung eines oberen und unteren Teils des hinteren Rumpfes und einem Propellerausrichtungsmechanismus, der stets dafür sorgt, dass die Ausrichtung des Heckpropellers der Rumpfachse entspricht.

US 2017/0369162 A1 offenbart ein multimodales unbemanntes Luftfahrzeug mit einem langgestreckten Rumpf, einem rechten und linken Festflügel, der sich eweils von einer rechten und linken Seite des langgestreckten Rumpfes erstreckt, einem rechten und linken Kippflügel, der auf einer ersten Seite an einem freien Ende des jeweiligen rechten und linken Festflügels befestigt ist, einem rechten und linken Kanal, der an einer zweiten Seite des jeweiligen rechten und linken Kippflügels befestigt ist, einem rechten und linken Winglet, das an dem jeweiligen rechten und linken Kanal gegenüber dem rechten und linken Kippflügel befestigt ist, einem Kippheck, das in einem gekrümmten Führungsschlitz an einem hinteren Ende des verlängerten Rumpfes angeordnet ist, einem hinteren Kanal, der an dem Kippheck befestigt ist, einem Kippmechanismus und einem integrierten autonomen Flugsteuerungssystem.

US 2012/0043413 A1 offenbart ein Flugzeug mit einem Rumpf mit einer Längsachse, einem linken und einem rechten Flügel, die sich jeweils vom Rumpf erstrecken, einem Heckabschnitt, der sich von einem hinteren Abschnitt des Rumpfes erstreckt, einem ersten und zweiten Kanalventilator, der drehbar am linken bzw. rechten Flügel montiert ist, und einem Triebwerk, das im Rumpf angeordnet ist und mit dem ersten und zweiten Kanalventilator verbunden ist.

US 9,550,567 B1 offenbart ein unbemanntes Luftfahrzeug (UAV), das im Flug zwischen vertikaler Flugkonfiguration und horizontaler Flugkonfiguration übergeht, indem es eine Ausrichtung des UAV um etwa neunzig Grad ändert. Das UAV kann Antriebseinheiten beinhalten, die mit einem Flügel gekoppelt sind. Der Flügel kann Flügelsegmente beinhalten, die drehbar miteinander durch Drehgelenke gekoppelt sind, die sich drehen, um die Antriebseinheiten um einen Massenschwerpunkt des UAV zu positionieren, wenn der Rumpf senkrecht zum Horizont ausgerichtet ist. In dieser vertikalen Flugkonfiguration kann das UAV Vertikalflüge oder Schwebeflüge durchführen. Während des Vertikalflugs kann sich der Flügel über die Drehpunkte nach außen erstrecken, so dass die Flügelsegmente im Wesentlichen parallel zueinander positioniert werden und der Flügel einem herkömmlichen festen Flügel ähnelt. Mit ausgefahrenem Flügel nimmt das UAV eine horizontale Flugkonfiguration an, die Auftrieb aus dem Flügel liefert.

Es ist eine Aufgabe der Erfindung, ein Luftfahrzeug und ein Verfahren zum Betreiben eines Luftfahrzeugs anzugeben, bei welchem unterschiedliche Flugarten und/oder ein Übergang zwischen unterschiedlichen Flugarten auf einfache und zuverlässige Weise ermöglicht werden bzw. wird.

Diese Aufgabe wird durch das Luftfahrzeug und das Verfahren gemäß den unabhängigen Ansprüchen gelöst.

Ein Luftfahrzeug gemäß einem Aspekt der Erfindung weist auf: mindestens einen Rumpf, welcher einen vorderen Rumpfabschnitt und einen hinteren Rumpfabschnitt aufweist, mindestens eine im Bereich des vorderen Rumpfabschnitts vorgesehene Tragfläche, mindestens eine im Bereich des vorderen Rumpfabschnitts und/oder an der Tragfläche vorgesehene erste Antriebseinrichtung, welche dazu eingerichtet ist, einen Vortrieb und/oder Auftrieb zu erzeugen, und mindestens ein Höhenleitwerk, welches dazu eingerichtet ist, das Luftfahrzeug während des Fluges um eine Querachse des Luftfahrzeugs zu drehen und/oder zu stabilisieren. Vorzugsweise ist das Höhenleitwerk am Rumpf, insbesondere am hinteren oder vorderen Rumpfabschnitt, angebracht und der hintere Rumpfabschnitt gegenüber dem vorderen Rumpfabschnitt um eine zur Querachse des Luftfahrzeugs im Wesentlichen parallele Schwenkachse schwenkbar. Alternativ oder zusätzlich ist das Höhenleitwerk an mindestens einem am Rumpf und/oder an der Tragfläche gelagerten Trägerelement angebracht, welches gegenüber dem Rumpf bzw. der Tragfläche um eine zur Querachse des Luftfahrzeugs im Wesentlichen parallele Schwenkachse schwenkbar ist.

Nach einem zweiten Aspekt der Erfindung wird bei einem Verfahren zum Betreiben eines Luftfahrzeugs, bei welchem das Höhenleitwerk am Rumpf angebracht ist, der hintere Rumpfabschnitt gegenüber dem vorderen Rumpfabschnitt um eine zur Querachse des Luftfahrzeugs im Wesentlichen parallele Schwenkachse geschwenkt. Alternativ oder zusätzlich wird bei einem Luftfahrzeug, bei welchem das Höhenleitwerk an mindestens einem am Rumpf und/oder an der Tragfläche gelagerten Trägerelement angebracht ist, das Trägerelement gegenüber dem Rumpf bzw. der Tragfläche um eine zur Querachse des Luftfahrzeugs im Wesentlichen parallele Schwenkachse geschwenkt.

Bevorzugte Aspekte der Erfindung basieren auf dem Ansatz, das Luftfahrzeug mit einem schwenkbaren Heck auszustatten. Vorzugsweise ist am schwenkbaren Heck das Höhenleitwerk, welches insbesondere eine Höhenflosse und/oder ein Höhenruder aufweist, angebracht. Alternativ kann das Höhenleitwerk aber auch im Bereich des vorderen Rumpfabschnitts, ggf. sogar vor den Tragflächen, angebracht sein. Das schwenkbare Heck kann z.B. durch einen gegenüber einem vorderen Rumpfabschnitt schwenkbaren hinteren Rumpfabschnitt des Rumpfes des Luftfahrzeugs gebildet werden, welcher in diesem Fall auch als Klapprumpf (engl. *tilt fuselage)* bezeichnet werden kann. Alternativ oder zusätzlich kann das schwenkbare Heck aber auch durch ein oder mehrere, vorzugsweise längliche, Trägerelemente, etwa Profilleisten oder Rohre, gebildet werden, die nicht unbedingt selbst Teil des Rumpfes im engeren Sinne sein müssen, sondern vielmehr am Rumpf und/oder an der Tragfläche oder den Tragflächen schwenkbar gelagert sind. Bei beiden Varianten kann das, vorzugsweise am distalen Ende des hinteren Rumpfabschnitts bzw. der Trägerelemente befindliche, Höhenleitwerk zusammen mit dem hinteren Rumpfabschnitt bzw. den Trägerelementen gegenüber dem vorderen Rumpfabschnitt, dem Rumpf bzw. der Tragfläche verschwenkt und dabei in unterschiedliche Schwenkstellungen bzw. räumliche Orientierungen gebracht werden. So kann das Heck z.B. in eine im Wesentlichen parallel oder senkrecht zum Rumpf bzw. zur Längsachse des Luftfahrzeugs verlaufende Orientierung gebracht werden.

Dadurch sind unterschiedliche Konfigurationen möglich, mit welchen das Abheben bzw. der Steigflug und/oder das Landen bzw. der Sinkflug und/oder der Vorwärtsflug sowie auch der Übergang zwischen diesen Flugarten auf einfache und zuverlässige Weise realisierbar sind bzw. ist.

Vorzugsweise ist mindestens eine Schwenkeinrichtung oder Schwenkmechanik vorgesehen, welche dazu eingerichtet ist, den hinteren Rumpfabschnitt gegenüber dem vorderen Rumpfabschnitt und/oder das mindestens eine Trägerelement gegenüber dem Rumpf bzw. der Tragfläche um die Schwenkachse zu schwenken. Die Schwenkeinrichtung ist vorzugsweise dazu eingerichtet, den hinteren Rumpfabschnitt bzw. das mindestens eine Trägerelement von einer ersten Orientierung in eine zweite Orientierung, welche zur ersten Orientierung im Wesentlichen senkrecht verläuft, zu schwenken. Vorzugsweise verläuft dabei der hintere Rumpfabschnitt bzw. das mindestens eine Trägerelement in der ersten Orientierung im Wesentlichen parallel zur Längsachse des Luftfahrzeugs und in der zweiten Orientierung im Wesentlichen senkrecht zur Längsachse des Luftfahrzeugs.

Auf diese Weise kann das schwenkbare Heck in unterschiedliche, insbesondere beim Starten, Vorwärtsflug und/oder Landen, vorteilhafte Positionen bzw. Orientierungen gebracht werden.

So wird dadurch z.B. ermöglicht, dass das Luftfahrzeug vor dem Starten und/oder nach dem Landen auf dem angewinkelten - d.h. in der zweiten Orientierung bzw. senkrecht zur Längsachse verlaufenden - Heck auf dem Boden stehen kann. In diesem Fall verläuft die Längsachse des Luftfahrzeugs im Wesentlichen vertikal, so dass die erste Antriebseinrichtung, die bei konventionellen Flugzeugen üblicherweise nur einen Vortrieb für den Vorwärtsflug erzeugt, auch zur Erzeugung eines Auftriebs für das Abheben bzw. für ein kontrolliertes Landen des Luftfahrzeugs dienen kann.

Vorzugsweise weist die Schwenkeinrichtung eine Schwenkantriebseinheit, insbesondere einen Motor, und ein mit der Schwenkantriebseinheit mechanisch gekoppeltes und/oder koppelbares Schwenkgetriebe auf, durch welches der hintere Rumpfabschnitt gegenüber dem vorderen Rumpfabschnitt und/oder das mindestens eine Trägerelement gegenüber dem Rumpf bzw. der Tragfläche um die Schwenkachse schwenkbar gelagert ist.

Vorzugsweise ist das Schwenkgetriebe als selbsthemmendes Getriebe ausgebildet. Dabei kann es sich vorzugsweise um jede Art von Getriebe handeln, bei welchem durch Reibung zwischen aneinander liegenden und/oder ineinander greifenden Getriebeteilen ein Widerstand gegen ein Verrutschen oder Verdrehen der aneinander liegenden bzw. ineinander greifenden Getriebeteile verursacht wird. Ein Getriebe ist vorzugsweise selbsthemmend, wenn es sich über die Antriebswelle, aber nicht über die Abtriebswelle antreiben lässt.

Grundsätzlich eignen sich hierzu Getriebe, bei welchen ein antreibendes Getriebeelement, etwa eine von einem Motor angetriebene Antriebswelle in Form einer Gewindestange, über eine Schraubverbindung mit einem angetriebenen Getriebeelement in Form einer auf der Gewindestange sitzenden Mutter gekoppelt ist. Ein selbsthemmender Effekt kann aber auch bei Getrieben durch hohe Übersetzungen und/oder Trägheitsmomente und/oder kleine Wirkungsgrade erreicht werden.

Vorzugsweise weist das Schwenkgetriebe ein Schneckengetriebe auf oder ist das Schwenkgetriebe als Schneckengetriebe ausgebildet. Das Schwenkgetriebe weist vorzugsweise auf: ein schraubenförmiges Getriebeelement, insbesondere eine Schnecke, welches von der Schwenkantriebseinheit in eine Drehbewegung um eine erste Drehachse versetzt werden kann, und ein in das schraubenförmige Getriebeelement eingreifendes Zahnrad, insbesondere ein Schneckenrad, welches durch eine Drehbewegung des Getriebeelements um die erste Drehachse um eine zur ersten Drehachse im Wesentlichen senkrechten zweiten Drehachse, welche insbesondere entlang der Schwenkachse verläuft, drehbar ist.

Durch die Verwendung mindestens eines solchen Schwenkgetriebes, welches insbesondere als selbsthemmendes Getriebe ausgebildet ist, kann der hintere Rumpfabschnitt gegenüber dem vorderen Rumpfabschnitt bzw. das mindestens eine Trägerelement gegenüber dem Rumpf bzw. der Tragfläche einerseits präzise um die Schwenkachse geschwenkt werden und anderseits zuverlässig in der jeweils eingenommenen Schwenkposition gehalten werden, ohne dass dazu zusätzliche Sicherungselemente zwingend nötig sind.

Erfindungsgemäß weist das Luftfahrzeug mindestens eine am Höhenleitwerk und/oder am hinteren Rumpfabschnitt und/oder an dem mindestens einen Trägerelement vorgesehene zweite Antriebseinrichtung auf, welche dazu eingerichtet ist, einen Auftrieb zu erzeugen.

Beispielsweise kann die zweite Antriebseinrichtung als Propeller oder Impeller ausgebildet sein. Bei einem Impeller handelt es sich vorzugsweise um einen von einem ring- oder röhrenförmigen Gehäuse umschlossenen Propeller.

Vorzugsweise ist die zweite Antriebseinrichtung als Impeller ausgebildet, welcher in das am hinteren Rumpfabschnitt bzw. an dem mindestens einen Trägerelement angebrachte Höhenleitwerk integriert ist. Durch die Integration eines Impellers in das Höhenleitwerk werden die aerodynamischen Eigenschaften des Höhenleitwerks gegenüber etwa einem am Höhenleitwerk angebrachten Propeller verbessert. Dies gilt insbesondere bei Konfigurationen bzw. Betriebsmodi des Luftfahrzeugs, bei welchen der hintere Rumpfabschnitt bzw. das mindestens eine Trägerelement in einer ersten Orientierung im Wesentlichen parallel zur, insbesondere horizontal ausgerichteten, Längsachse des Luftfahrzeugs verläuft bzw. orientiert ist, wie dies z.B. im weiter unten näher beschriebenen zweiten Schwebemodus und/oder insbesondere im Vorwärtsflugmodus der Fall ist. So wird die zweite Antriebseinrichtung insbesondere beim Vorwärtsflug in der Regel nicht zur Erzeugung eines Auftriebs benötigt und kann entsprechend deaktiviert werden. Ein in das Höhenleitwerk integrierter, deaktivierter Impeller hat dann aerodynamisch wesentlich günstigere Eigenschaften als ein auf dem Höhenleitwerk angebrachter, deaktivierter Propeller.

Grundsätzlich kann aber, alternativ oder zusätzlich, zu einem Impeller, jede andere Einrichtung eingesetzt werden, die dazu geeignet ist, einen Auftrieb oder zusätzlichen Auftrieb zu erzeugen, beispielsweise ein Strahltriebwerk, Turbinenstrahltriebwerk, Staustrahltriebwerk oder Raketentriebwerk.

Vorzugsweise ist die zweite Antriebseinrichtung so angeordnet und/oder eingerichtet, dass sie einen Auftrieb erzeugt, wenn sich das Heck in der angewinkelten Stellung befindet, d.h. wenn der hintere Rumpfabschnitt bzw. das mindestens eine Trägerelement im Wesentlichen senkrecht zur Längsachse des Luftfahrzeugs orientiert ist. Insbesondere wird durch die zweite Antriebseinrichtung der Auftrieb zusätzlich zu einem, vorzugsweise während des Startens und/oder Landens, von der ersten Antriebseinrichtung erzeugten Auftrieb bei im Wesentlichen vertikal ausgerichteter Längsachse erzeugt. Der für das Starten bzw. kontrollierte Landen erforderliche Auftrieb kann dadurch auf besonders zuverlässige und steuerbare Weise zur Verfügung gestellt werden.

Es ist ferner bevorzugt, dass die zweite Antriebseinrichtung so angeordnet und/oder eingerichtet ist, dass sie einen Auftrieb erzeugt, wenn der hintere Rumpfabschnitt bzw. das mindestens eine Trägerelement in der zweiten Orientierung im Wesentlichen senkrecht zur, insbesondere vertikal ausgerichteten, Längsachse des Luftfahrzeugs verläuft bzw. orientiert ist.

Vorzugsweise ist die am Höhenleitwerk vorgesehene zweite Antriebseinrichtung dazu eingerichtet, in mindestens einer Richtung eine Antriebskraft (A) zu erzeugen, wobei die zweite Antriebseinrichtung durch Schwenken, insbesondere nur durch Schwenken, des hinteren Rumpfabschnitts zusammen mit dem daran angebrachten Höhenleitwerk um die Schwenkachse bzw. des mindestens einen Trägerelements zusammen mit dem daran angebrachten Höhenleitwerk um die Schwenkachse in eine Position und/oder Orientierung gebracht wird bzw. werden kann, in welcher die Richtung der von der zweiten Antriebseinrichtung erzeugbaren und/oder erzeugten Antriebskraft (A) im Wesentlichen der Richtung einer von der ersten Antriebseinrichtung erzeugbaren und/oder erzeugten Auftriebskraft entspricht, so dass sowohl von der ersten Antriebseinrichtung als auch der zweiten Antriebseinrichtung ein Auftrieb (A1) erzeugt werden kann bzw. wird. Vorzugsweise verläuft die Richtung der von der zweiten Antriebseinrichtung erzeugten Antriebskraft (A) im Wesentlichen senkrecht zum Höhenleitwerk bzw. zur Höhenflosse.

Anders als bei Luftfahrzeugen, bei welchen zur Erzeugung eines Auftriebs beispielsweise sowohl die Tragflächen als auch das Höhenleitwerk zusammen mit daran angebrachten Propellern oder die jeweiligen Propeller alleine entsprechend gekippt werden, wird bei dieser bevorzugten Ausführung lediglich das Heck (hinterer Rumpfabschnitt bzw. Trägerelemente) zusammen mit dem daran befindlichen Höhenleitwerk mit der daran vorzugsweise fest angeordneten, insbesondere in das Höhenleitwerk integrierten, zweiten Antriebseinrichtung gegenüber dem vorderen Rumpf geschwenkt.

Dadurch kann das Luftfahrzeug in nur einem Arbeitsgang - d.h. durch Schwenken des vorderen Rumpfabschnitts gegenüber dem hinteren Rumpfabschnitt bzw. den Trägerelementen bzw. durch Schwenken des hinteren Rumpfabschnitts bzw. der Trägerelemente gegenüber dem vorderen Rumpfabschnitt - in eine Konfiguration gebracht werden, in der insbesondere bei im Wesentlichen vertikal ausgerichteter Längsachse des Luftfahrzeugs sowohl von der ersten Antriebseinrichtung (z.B. vom vorderen Propeller) als auch der zweiten Antriebseinrichtung (z.B. Impeller bzw. Schubvektor) ein Auftrieb erzeugt werden kann.

Alternativ oder zusätzlich kann die zweite Antriebseinrichtung dazu eingerichtet sein, Antriebskräfte vorzugsweise in jeder beliebigen Richtung zu erzeugen.

Vorzugsweise können die von der zweiten Antriebseinrichtung erzeugten Antriebskräfte nicht nur zum Auftrieb des Luftfahrzeugs in einem Senkrechtflugmodus beitragen, sondern auch zum Richtungswechsel und/oder zur Richtungsstabilisierung in einem Vorwärts- und/oder Senkrechtflugmodus beitragen. So kann z.B. im Vorwärtsflugmodus und/oder im zweiten Schwebemodus die Flugrichtung des Luftfahrzeugs in Vorwärtsrichtung bzw. in vertikaler Richtung stabilisiert werden, indem etwa durch Erzeugen von entsprechend gerichteten Antriebskräften ein "Ausbrechen" des Hecks nach oben und/oder unten und/oder zu einer Seite hin verhindert wird. Entsprechendes gilt für einen Richtungswechsel bzw. das Lenken des Luftfahrzeugs durch Erzeugen entsprechend nach oben bzw. unten bzw. zu einer der Seiten hin gerichteter zusätzlicher Antriebskräfte.

Bei einer weiteren bevorzugten Ausgestaltung weist bzw. weisen die erste Antriebseinrichtung und/oder die zweite Antriebseinrichtung eine Schubvektorsteuerung auf, durch welche die Stärke und/oder die Richtung des jeweils erzeugten Vortriebs bzw. Auftriebs veränderbar ist bzw. sind. Dadurch werden Lenkbewegungen ermöglicht, indem z.B. ein Abgasstrahl der jeweiligen Antriebseinrichtung gezielt gerichtet wird, etwa durch Strahlruder, Ablenkflächen an einem Düsenaustritt oder Schwenken der Düse selbst. Dies ist insbesondere beim Senkrechtstart von Vorteil, bei welchem das Luftfahrzeug beim vertikalen Start vom senkrecht nach unten gelenkten Schub getragen wird. Für den Horizontal- bzw. Vorwärtsflug werden die Düsen in die entsprechende Position geschwenkt, um das Luftfahrzeug zunächst von der vertikalen Orientierung in eine im Wesentlichen horizontale Orientierung zu bringen und ihm dann den für den Vorwärtsflug erforderlichen Vortrieb zu geben, wobei der Auftrieb dann auf konventionelle Weise von den Tragflächen erzeugt wird.

Erfindungsgemäß ist eine Steuerungseinrichtung vorgesehen, welche dazu eingerichtet ist, das Luftfahrzeug in einem ersten Schwebemodus, in welchem das Luftfahrzeug starten und/oder landen kann, so zu steuern, dass der hintere Rumpfabschnitt bzw. das mindestens eine Trägerelement in die im Wesentlichen senkrecht zur Längsachse des Luftfahrzeugs verlaufende zweite Orientierung geschwenkt wird bzw. ist, wobei die Längsachse des Luftfahrzeugs im Wesentlichen in vertikaler Richtung verläuft, und der Auftrieb des Luftfahrzeugs durch die erste und zweite Antriebseinrichtung erzeugt wird.

Erfindungsgemäß ist die Steuerungseinrichtung ferner dazu eingerichtet ist, das Luftfahrzeug in einem zweiten Schwebemodus, in welchem das Luftfahrzeug starten und/oder landen kann, so zu steuern, dass der hintere Rumpfabschnitt bzw. das mindestens eine Trägerelement in die im Wesentlichen parallel zur Längsachse des Luftfahrzeugs verlaufende erste Orientierung geschwenkt wird bzw. ist, wobei die Längsachse des Luftfahrzeugs im Wesentlichen in vertikaler Richtung verläuft, und der Auftrieb des Luftfahrzeugs durch die erste Antriebseinrichtung erzeugt wird.

Vorzugsweise ist die Steuerungseinrichtung dazu eingerichtet, das Luftfahrzeug in einem Vorwärtsflugmodus, in welchem das Luftfahrzeug vorwärts fliegen kann, so zu steuern, dass der hintere Rumpfabschnitt bzw. das mindestens eine Trägerelement in die im Wesentlichen parallel zur Längsachse des Luftfahrzeugs verlaufende erste Orientierung geschwenkt wird bzw. ist, wobei die Längsachse des Luftfahrzeugs im Wesentlichen in horizontaler Richtung verläuft, und der Vortrieb des Luftfahrzeugs durch die erste Antriebseinrichtung und der Auftrieb des Luftfahrzeugs durch die Tragfläche und das Höhenleitwerk erzeugt wird.

Vorzugsweise ist die Steuerungseinrichtung ferner dazu eingerichtet, das Luftfahrzeug vom zweiten Schwebemodus in den Vorwärtsflugmodus zu überführen, indem die zweite Antriebseinrichtung vorübergehend aktiviert wird und/oder das Höhenleitwerk, insbesondere eine oder mehrere Steuerflächen am Höhenleitwerk, aktiviert wird, so dass das Luftfahrzeug um die Querachse gedreht wird.

Alternativ kann das Luftfahrzeug vom ersten Schwebemodus, in welchem das Luftfahrzeug z.B. vom Boden abheben kann, direkt oder fließend in den Vorwärtsflugmodus übergehen, ohne dass es zwischenzeitlich im oben beschriebenen zweiten Schwebemodus betrieben wird. In diesem Fall wird z.B. der hintere Rumpfabschnitt bzw. das mindestens eine Trägerelement während des Steigflugs allmählich aus der im Wesentlichen senkrecht zur Längsachse des Luftfahrzeugs verlaufenden zweiten Orientierung in die erste Orientierung geschwenkt und optional zusätzlich dafür gesorgt, dass das Luftfahrzeug um die Querachse gedreht wird, z.B. indem die zweite Antriebseinrichtung und/oder das Höhenleitwerk, insbesondere eine oder mehrere Steuerflächen am Höhenleitwerk, entsprechend aktiviert wird bzw. werden.

Weitere Vorteile, Merkmale und Anwendungsmöglichkeiten der vorliegenden Erfindung ergeben sich aus der nachfolgenden Beschreibung in Zusammenhang mit den Figuren. Es zeigen:
- Fig. 1: eine schematische Darstellung eines Beispiels eines Luftfahrzeugs;
- Fig. 2: eine schematische Darstellung unterschiedlicher Konfigurationen bzw. Betriebsmodi des Luftfahrzeugs;
- Fig. 3: eine schematische Darstellung des Luftfahrzeugs zur Veranschaulichung einer Verlagerung des Massenschwerpunkts in unterschiedlichen Konfigurationen bzw. Betriebsmodi;
- Fig. 4: eine schematische Darstellung unterschiedlicher Konfigurationen bzw. Betriebsmodi anhand von zwei weiteren Beispielen eines Luftfahrzeugs;
- Fig. 5: eine schematische Querschnittsdarstellung eines Beispiels einer in das Höhenleitwerk integrierten zweiten Antriebseinrichtung; und
- Fig. 6: eine schematische Seitenansicht eines Beispiels einer Schwenkeinrichtung.

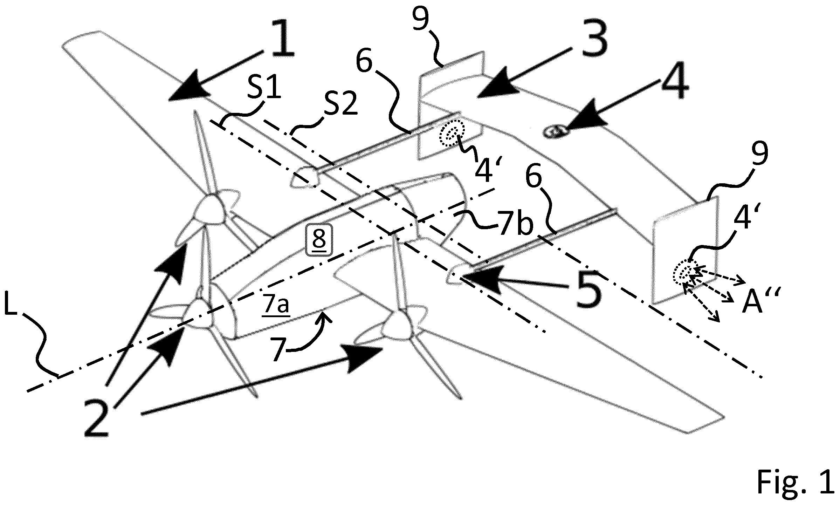

Figur 1 zeigt eine schematische Darstellung eines Beispiels eines Luftfahrzeugs bzw. Flugobjekts, das senkrecht starten und landen kann und im Folgenden auch als "Gesamtsystem" bezeichnet wird.

Das Gesamtsystem weist auf: einen Rumpf 7, eine Tragfläche 1, ein Hauptantriebssystem 2, ein Höhenleitwerk 3, ein Hilfsantriebssystem 4 und eine Schwenkmechanik 5.

Im vorliegenden Beispiel weist das Hauptantriebssystem 2, welches im Zusammenhang mit der vorliegenden Offenbarung auch als erste Antriebseinrichtung bezeichnet wird, einen am vorderen Ende (Bug) des Rumpfes 7 und jeweils einen am linken und rechten Abschnitt der Tragfläche 1 angeordneten Propeller auf.

Das Höhenleitwerk 3, welches zur Stabilisierung und Steuerung der Fluglage um die Querachse des Luftfahrzeugs und damit auch zur Steuerung des Anstellwinkels und der Geschwindigkeit dient, weist im vorliegenden Beispiel eine, vorzugsweise feststehende und/oder in sich nicht schwenkbare, Höhenflosse auf, kann aber auch aus einer feststehenden und/oder in sich nicht schwenkbaren Höhenflosse und einem beweglichen und/oder in sich schwenkbaren Höhenruder (nicht dargestellt), welches vorzugsweise an der Höhenflosse schwenkbar gelagert ist, zusammengesetzt sein. Alternativ oder zusätzlich kann das Höhenleitwerk 3 eine in sich schwenkbare Höhenflosse aufweisen. Das Höhenleitwerk 3 übt beim statischen Geradeausflug auf das Heck eine abwärts gerichtete Kraft aus, um das kopflastige Drehmoment der Gewichtstrimmung auszugleichen.

Im vorliegenden Beispiel sind am Höhenleitwerk 3 zwei Seitenflügel 9 vorgesehen, die auch als Seitenflossen bezeichnet werden können, an den seitlichen Enden der Höhenflosse angebracht und im Wesentlichen senkrecht zur Höhenflosse ausgerichtet sind.

Das Hilfsantriebssystem 4, welches im Zusammenhang mit der vorliegenden Offenbarung auch als zweite Antriebseinrichtung bezeichnet wird, ist im dargestellten Beispiel vorzugsweise als Impeller ausgebildet, welcher in das Höhenleitwerk 3 bzw. in die, insbesondere feststehende, Höhenflosse integriert ist.

Im vorliegenden Beispiel sind zwei, z.B. leistenförmige oder rohrförmige, Trägerelemente 6 vorgesehen, die mit einem vorderen Ende an der an der Tragfläche 1 befindlichen Schwenkmechanik 5 angebracht sind. Am hinteren Ende der Trägerelemente 6 ist das Höhenleitwerk 3 angebracht. Dadurch können die Trägerelemente zusammen mit dem darauf befindlichen Höhenleitwerk 3 um eine durch die Schwenkmechanik 5 und/oder im Wesentlichen parallel zur Querachse und/oder im Wesentlichen senkrecht zur Längsachse L des Luftfahrzeugs verlaufende Schwenkachse S1 geschwenkt bzw. gekippt werden.

Die Schwenkmechanik 5, welche im Zusammenhang mit der vorliegenden Offenbarung auch als Schwenkeinrichtung bezeichnet wird, ist vorzugsweise als selbsthemmende Mechanik eingerichtet und/oder weist ein selbsthemmendes Getriebe auf, durch welche bzw. welches die Trägerelemente 6 etwa mithilfe eines Motorantriebs (nicht dargestellt) um die Schwenkachse S1 geschwenkt werden können, ein Schwenken der Trägerelemente 6 durch von außen auf die Höhenleitwerk 3 und/oder die Trägerelemente 6 wirkende Kräfte bzw. Drehmomente unterbunden oder zumindest erschwert wird.

Bei einer weiteren, in der Figur 1 nicht dargestellten Ausführungsvariante kann das Höhenleitwerk 3, statt an leisten- oder rohrförmigen Trägerelementen 6, an einem hinteren Rumpfabschnitt 7b des Rumpfes 7 angebracht sein, welcher gegenüber dem vorderen Rumpfabschnitt 7a schwenkbar ist. Dabei ist der hintere Rumpfabschnitt 7b vorzugsweise länger als bei dem in der Figur 1 gezeigten Beispiel. Ferner ist die in Figur 1 schematisch angedeutete Schwenkmechanik 5 vorzugsweise im oder am Rumpf 7 angeordnet und entsprechend dimensioniert und/oder eingerichtet, um ein Verschwenken bzw. Kippen des hinteren Rumpfabschnitts 7b, einschließlich des daran angebrachten Höhenleitwerks 3, gegenüber dem vorderen Rumpfabschnitt 7a um eine im Wesentlichen parallel zur Querachse und/oder im Wesentlichen senkrecht zur Längsachse L des Luftfahrzeugs verlaufende Schwenkachse S2 zu ermöglichen.

Bei beiden Varianten ermöglicht die Schwenkmechanik 5 eine Transformation des Gesamtsystems zwischen unterschiedlichen reversiblen Konfigurationen, welche vorzugsweise mindestens zwei verschiedene Schwebemodi und einen aerodynamischen Modus, welcher auch als Vorwärtsflugmodus bezeichnet wird, aufweisen.

Vorzugsweise ist das Höhenleitwerk 3 bzw. die Höhenflosse an den Trägerelementen 6 bzw. am hinteren Rumpfabschnitt 7b fest, insbesondere in sich nicht schwenkbar, angebracht. Alternativ kann das Höhenleitwerk 3 bzw. die Höhenflosse an den Trägerelementen 6 bzw. am hinteren Rumpfabschnitt 7b aber auch beweglich, insbesondere in sich schwenkbar, gelagert sein. Hierbei ist das Höhenleitwerk 3 bzw. die Höhenflosse nicht nur zusammen mit den Trägerelementen 6 bzw. dem hinteren Rumpfabschnitt 7b um die Schwenkachse S1 bzw. S2 schwenkbar, sondern zusätzlich auch um eine am oder im Bereich des Höhenleitwerks 3 bzw. der Höhenflosse verlaufende weitere Schwenkachse (nicht dargestellt), die vorzugsweise parallel zur Schwenkachse S1 bzw. S2 der Trägerelemente 6 bzw. des hinteren Rumpfabschnitts 7b verläuft.

Zur Steuerung des Luftfahrzeugs in den unterschiedlichen Betriebsmodi bzw. Konfigurationen und entsprechender Übergänge zwischen den Betriebsmodi bzw. Konfigurationen ist eine Steuerungseinrichtung 8 vorgesehen, durch welche das Hauptantriebssystem 2 und/oder das Höhenleitwerk 3 und/oder das Hilfsantriebssystem 4 und/oder die Schwenkmechanik 5 entsprechend gesteuert wird bzw. werden. Dies wird nachfolgend anhand von Beispielen näher erläutert.

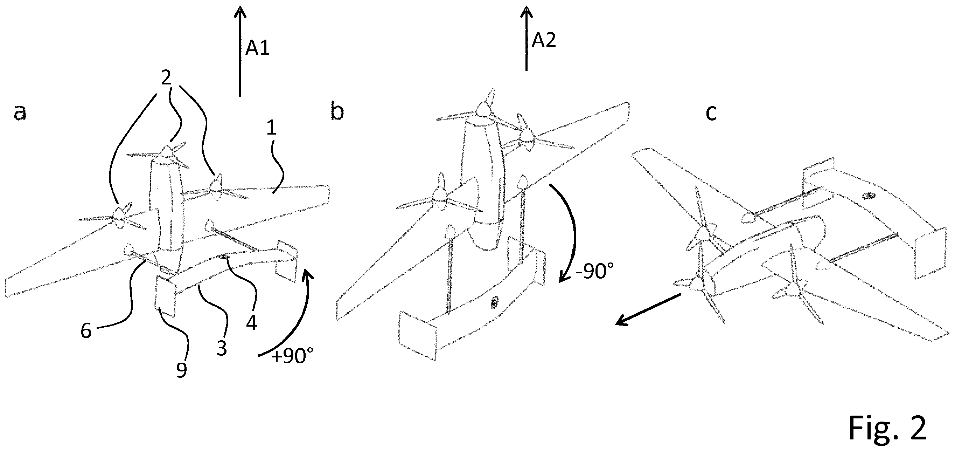

Figur 2 zeigt eine schematische Darstellung unterschiedlicher Konfigurationen bzw. Betriebsmodi des Luftfahrzeugs.

Im ersten Schwebemodus, in welchem sich das Luftfahrzeug vorzugsweise beim Abheben und/oder Landen befindet, wird der Auftrieb durch das Hauptantriebssystem 2 und das Hilfsantriebssystem 4 erzeugt, wie in Figur 2a veranschaulicht ist. Im gezeigten Beispiel sind die beiden Trägerelemente 6 zusammen mit dem daran angebrachten Höhenleitwerk 3 hochgeklappt und verlaufen im Wesentlichen senkrecht zur im Wesentlichen vertikal orientierten Längsachse L des Luftfahrzeugs. Der hintere Rumpfabschnitt 7b und/oder das Höhenleitwerk 3, insbesondere an den beiden äußeren Enden des Höhenleitwerks 3 vorgesehene Seitenflügel 9, sind dabei vorzugsweise so ausgestaltet, dass das Luftfahrzeug, z.B. vor dem Abheben und/oder nach dem Landen, mit dem hinteren Rumpfabschnitt 7b und dem Höhenleitwerk 3 auf dem Boden stehen kann.

Im zweiten Schwebemodus, im welchem sich das Luftfahrzeug beispielsweise nach dem Abheben und/oder vor dem Landen befindet, wird der Auftrieb nur durch das Hauptantriebssystem 2 erzeugt, wie in Figur 2b veranschaulicht ist.

Eine Stabilisierung in den Schwebemodi kann mittels des Hauptantriebs 2, Hilfsantriebs 4 und über Steuerflächen (nicht dargestellt) an der Tragfläche 1 und/oder am Höhenleitwerk 3 erfolgen. Letztere befinden sich im Luftstrom des Hauptantriebs 2.

Im aerodynamischen Modus, in welchem sich das Luftfahrzeug vorzugsweise beim Vorwärtsflug befindet, wird der Vortrieb nur durch den Hauptantrieb 2 und der Auftrieb durch die Tragfläche 1 und das Höhenleitwerk 3 erzeugt, wie in Figur 2c veranschaulicht ist. Die Steuerung des Luftfahrzeugs kann mittels Steuerflächen an der Tragfläche 1 und am Höhenruder bzw. Höhenleitwerk 3 erfolgen.

Für den Startvorgang hebt das Gesamtsystem im ersten Schwebemodus ab (Fig. 2a). Nach dem Abheben wird das Höhenleitwerk 3 mittels der Schwenkmechanik 5 heruntergeklappt, so dass der zweite Schwebemodus erreicht wird (Fig. 2b). Nach dem Herunterklappen beschleunigt und rotiert das Gesamtsystem in den aerodynamischen Modus (Fig. 2c). Für die Rotation können die Steuerflächen am Höhenruder bzw. Höhenleitwerk 3 und/oder der Hilfsantrieb 4 verwendet werden.

Der Landevorgang beginnt im aerodynamischen Modus (Fig. 2c). Das Gesamtsystem rotiert zunächst in den zweiten Schwebemodus (Fig. 2b). Für die Rotation können die Steuerflächen am Höhenruder bzw. Höhenleitwerk 3 und/oder der Hilfsantrieb 4 verwendet werden. Im zweiten Schwebemodus wird mittels Schwenkmechanik 5 das Höhenleitwerk 3 nach oben geklappt, um den ersten Schwebemodus zu erreichen (Fig. 2a). Das Gesamtsystem kann wieder landen.

Anders als bei Luftfahrzeugen, bei welchen zum Senkrechtstart beispielsweise die Tragflächen und das Höhenleitwerk zusammen mit daran angebrachten Propellern und/oder an den Tragflächen schwenkbar gelagerte Propeller jeweils um 90° gekippt werden, wird beim vorliegenden Luftfahrzeug vorzugsweise lediglich das Heck, d.h. der hintere Rumpfabschnitt 7b bzw. die Trägerelemente 6, zusammen mit dem daran befindlichen Höhenleitwerk 3 und der am Höhenleitwerk 3 fest angeordneten und/oder in das Höhenleitwerk integrierten zweiten Antriebseinrichtung 4 gegenüber dem vorderen Rumpf 7a geschwenkt. Je nach Ausgangskonfiguration gilt dies auch umgekehrt, d.h. der vordere Rumpfabschnitt 7a bzw. Rumpf 7 wird gegenüber dem Heck, d.h. dem hinteren Rumpfabschnitt 7b bzw. den Trägerelementen 6 und dem daran befindlichen Höhenleitwerk 3 geschwenkt.

Dadurch kann das Luftfahrzeug in nur einem Arbeits- bzw. Schwenkvorgang, bei welchem der vordere Rumpfabschnitt 7a bzw. Rumpf 7 gegenüber dem hinteren Rumpfabschnitt 7b bzw. den Trägerelementen 6 und/oder der hintere Rumpfabschnitt 7b bzw. die Trägerelemente 6 gegenüber dem vorderen Rumpfabschnitt 7a bzw. dem Rumpf 7 um vorzugsweise +90° geschwenkt wird, in eine Konfiguration gebracht werden, in der sowohl von der ersten Antriebseinrichtung 2 (z.B. Propeller) als auch der zweiten Antriebseinrichtung 4 (z.B. Impeller, Schubvektor) ein Auftrieb (siehe Pfeil A1 in Fig. 2a) erzeugt werden kann.

Vorzugsweise ist das Luftfahrzeug so steuerbar und/oder eingerichtet, dass die Längsachse L des Luftfahrzeugs, vorzugsweise unmittelbar, nach dem Schwenken des hinteren Rumpfabschnitt 7b bzw. der Trägerelemente 6 und/oder des vorderen Rumpfabschnitts 7a bzw. des Rumpfs 7 in die in Fig. 2a gezeigte Konfiguration im Wesentlichen in vertikaler Richtung verläuft. Der hintere Rumpfabschnitt 7b bzw. die Trägerelemente 6 verlaufen dann vorzugsweise im Wesentlichen in horizontaler Richtung.

Umgekehrt kann das Luftfahrzeug von der in Fig. 2a gezeigten Konfiguration in nur einem Arbeits- bzw. Schwenkvorgang, bei welchem der hintere Rumpfabschnitt 7b bzw. die Trägerelemente 6 gegenüber dem vorderen Rumpfabschnitt 7a um vorzugsweise -90° in die entgegengesetzte Richtung geschwenkt wird, in eine Konfiguration gebracht werden, in der - z.B. nach einem Senkrechtstart - nur noch von der ersten Antriebseinrichtung 2 (z.B. Propeller) ein Auftrieb (siehe Pfeil A2 in Fig. 2b) erzeugt wird.

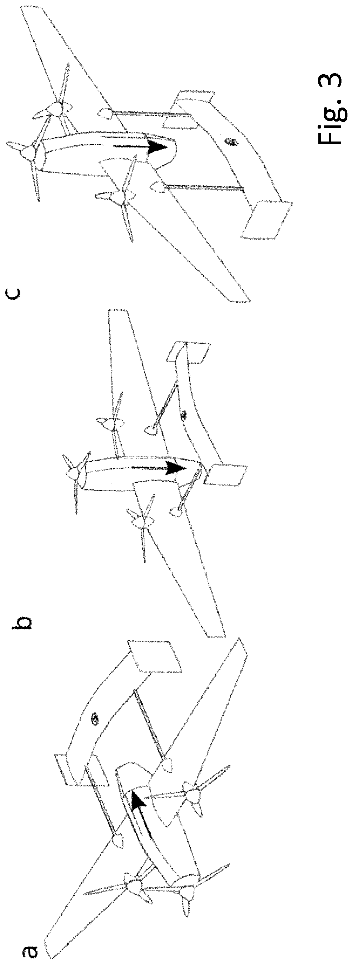

Für einen weiter verbesserten ersten und zweiten Schwebemodus können Modifikationen am Gesamtsystem wie folgt durchgeführt werden:
(1) Schubvektorsteuerung des Hauptantriebssystems 2 und/oder des Hilfsantriebssystems 4. Eine Schubvektorsteuerung zeichnet sich dadurch aus, dass Größe und Richtung des erzeugten Auftriebsvektors der verschiedenen Antriebssysteme 2 bzw. 4 verändert werden kann. Eine solche Änderung ist eine effiziente Methode zur Steuerung des Gesamtsystems.
(2) Verlagerung des aerodynamischen Schwerpunkts und gleichzeitig des Massenschwerpunkts in Richtung des Hecks des Höhenleitwerks 3 im aerodynamischen Modus (in Richtung des Pfeils in Fig. 3a). Durch diese Verlagerung schiebt sich der Massenschwerpunkt des Gesamtsystems in den beiden Schwebemodi nach unten (in Richtung des Pfeils in Fig. 3b und 3c). Dadurch wird ein stabilerer Grundzustand des Gesamtsystems in den beiden Schwebemodi erreicht. Dies kann sowohl statisch, z.B. durch entsprechende Konstruktion des Luftfahrzeugs, als auch dynamisch, z.B. während des Fluges bzw. Übergangs zwischen den Betriebsmodi bzw. Konfigurationen, erfolgen. Zur Realisierung einer dynamischen Massenschwerpunktverlagerung kann z.B. eine im oder am Rumpf 7 befindliche Masse mittels einer geeigneten Verschiebemechanik in Richtung bzw. parallel zur Längsachse L verschiebbar gelagert sein. Die verschiebbar gelagerte Masse kann z.B. durch einen eigens für diesen Zweck vorgesehenen zusätzlichen Massenkörper und/oder durch verschiebbar gelagertes Frachtgut gegeben sein. Alternativ oder zusätzlich kann die verschiebbare Masse aber auch durch einen bereits vorhandenen Bestandteil des Luftfahrzeugs, etwa im Rumpf 7 befindliche Akkus, gegeben sein. Die Verschiebemechanik kann z.B. einen Schlitten oder Riemen, mittels welchem die Masse verschoben oder verlagert werden kann, und einen Motor, z.B. einen Schrittmotor, zum Antreiben des Schlittens bzw. Riemens aufweisen. Auch wenn bei dem in den Figuren 1 bis 3 beispielhaft gezeigten Luftfahrzeug das Höhenleitwerk 3 an an der Tragfläche 1 schwenkbar gelagerten Trägerelementen 6 angebracht ist, gelten die oben beschriebenen Ausführungen auch für die Ausführungsvariante entsprechend, bei welcher das Höhenleitwerk 3 an einem schwenkbaren hinteren Rumpfabschnitt 7b oder am vorderen Rumpfabschnitt 7a angebracht ist. Falls das Höhenleitwerk 3 am vorderen Rumpfabschnitt 7a angebracht ist, kann dieses je nach Bauart, in Flugrichtung betrachtet, sogar vor der Tragfläche 1 angeordnet sein. Diese und weitere Ausführungsvarianten werden im Folgenden anhand von Beispielen näher erläutert.

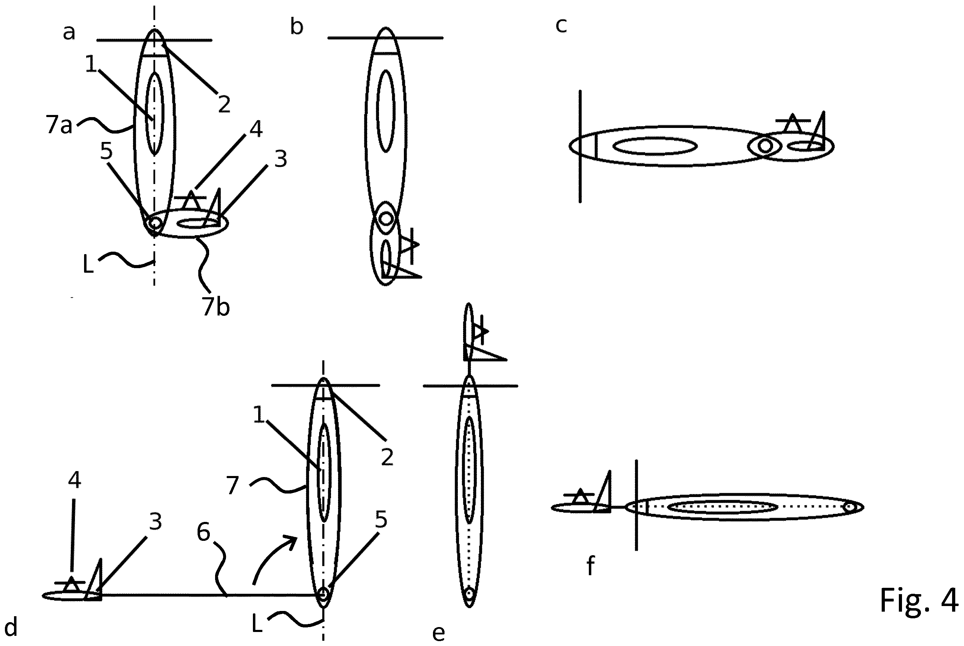

Figur 4 zeigt unterschiedliche Konfigurationen bzw. Betriebsmodi anhand von zwei weiteren Beispielen eines Luftfahrzeugs in einer stark schematisierten Seitenansicht.

Bei dem in Figur 4a bis 4c gezeigten Beispiel eines Luftfahrzeugs ist der hintere Rumpfabschnitt 7b mittels Schwenkeinrichtung 5 am vorderen Rumpfabschnitt 7a schwenkbar gelagert. Am vorderen Rumpfabschnitt 7a sind die Tragfläche 1 und das Hauptantriebssystem 2, etwa in Form eines Propellers, angebracht. Sowohl das Höhenleitwerk 3 als auch der Hilfsantrieb 4 sind am hinteren Rumpfabschnitt 7b angebracht und können zusammen mit diesem gegenüber den vorderen Rumpfabschnitt 7a verschwenkt werden. Die Schwenkachse verläuft im vorliegenden Beispiel im Wesentlichen senkrecht zur Zeichenebene bzw. zur Längsachse L des Luftfahrzeugs. Analog zu dem in Figur 2a bis 2c gezeigten Beispiel zeigt Figur 4a den ersten Schwebemodus, in welchem sich das Luftfahrzeug vorzugsweise beim Abheben und/oder Landen befindet, Figur 4b den zweiten Schwebemodus, in welchem sich das Luftfahrzeug vorzugsweise nach dem Abheben und/oder vor dem Landen befindet, und Figur 4c den aerodynamischen Modus, in welchem sich das Luftfahrzeug vorzugsweise während des Vorwärtsflugs befindet. Die vorstehenden Ausführungen im Zusammenhang mit Figur 2a bis 2c gelten für Figur 4a bis 4c entsprechend. Vorzugsweise ist, wie in Figur 4a angedeutet, der hintere Rumpfabschnitt 7b so ausgestaltet, insbesondere dimensioniert und/oder geformt, dass das Luftfahrzeug im ersten Schwebemodus, z.B. vor dem Abheben und/oder nach dem Landen, mit dem hinteren Rumpfabschnitt 7b auf dem Boden stehen kann.

Bei dem in Figur 4d bis 4f gezeigten Beispiel eines Luftfahrzeugs sind das Höhenleitwerk 3 und der Hilfsantrieb 4 an einem Ende mindestens eines Trägerelements 6 angebracht, das mit seinem anderen Ende mittels Schwenkeinrichtung 5 am hinteren Bereich des Rumpfes7 schwenkbar gelagert ist. Hierbei ist die Schwenkeinrichtung 5 so ausgestaltet und/oder die Länge des mindestens einen Trägerelements 6 so gewählt, dass das mindestens eine Trägerelement 6 auf den Rumpf 7 zu, und dabei vorzugsweise in eine Längsebene bzw. die Längsachse L des Rumpfes 7 hinein, geschwenkt werden kann (siehe gekrümmter Pfeil). Das Höhenleitwerk 3 und der Hilfsantrieb 4 können auf diese Weise, in Flugrichtung betrachtet, vor dem Rumpf 7 und/oder vor dem Hauptantrieb 2 und/oder vor der Tragfläche 1 positioniert werden, wie in Figur 4e und 4f angedeutet ist. Die vorstehenden Ausführungen im Zusammenhang mit Figur 2a bis 2c gelten für Figur 4d bis 4f entsprechend.

Das beschriebene Konzept des Luftfahrzeugs kann auf manntragende und unbemannte Systeme angewendet werden.

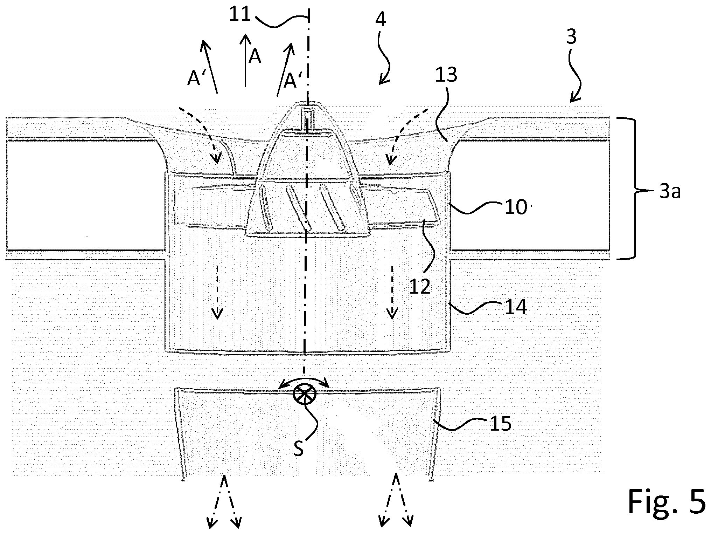

Figur 5 zeigt eine schematische Querschnittsdarstellung eines Beispiels einer in das Höhenleitwerk 3 integrierten zweiten Antriebseinrichtung 4, welche als Impeller ausgebildet ist.

In der Höhenflosse 3a des Höhenleitwerks 3, von welcher bzw. welchem in der Darstellung nur ein Ausschnitt zu sehen ist, ist ein Durchbruch vorgesehen, in welchen ein ring- oder röhrenförmiges Gehäuse 10 integriert ist. Im Gehäuse 10 ist ein um eine Propellerachse 11 drehbar gelagerter Propeller 12 angeordnet.

Der Propeller 12 ist an einer (aus Anschaulichkeitsgründen nicht dargestellten) Antriebswelle angebracht, welche von einem Motor (nicht dargestellt) in Rotation versetzt werden kann.

Das Gehäuse 10 weist vorzugsweise einen oberen Gehäusebereich 13 auf, dessen Durchmesser bzw. Querschnitt ausgehend von einem Bereich des Gehäuses 10, in welchem der Propeller 12 angeordnet ist, zur Oberseite der Höhenflosse 3a hin, vorzugsweise kontinuierlich, zunimmt und vorzugsweise in die Oberseite der Höhenflosse 3a übergeht und/oder mit dieser fluchtet. Alternativ oder zusätzlich kann das Gehäuse 10 einen unteren Gehäuseabschnitt 14 aufweisen, welcher über die Unterseite der Höhenflosse 3a hinausragt.

Der durch eine Rotation des Propellers 12 verursachte Luftstrom, der in Fig. 5 durch gestrichelte Pfeile angedeutet ist, durch das Gehäuse 10 bewirkt eine Antriebskraft A, welche zum Manövrieren des Luftfahrzeugs genutzt werden kann und/oder insbesondere im ersten Schwebemodus als zusätzliche Auftriebskraft (d.h. zusätzlich zu der von der ersten Antriebseinrichtung 2 erzeugten Auftriebskraft) einen Senkrechtstart bzw. ein Abheben des Luftfahrzeugs vom Boden unterstützt, wie vorstehend im Zusammenhang mit Fig. 2a näher erläutert wurde.

Die als Impeller ausgebildete zweite Antriebseinrichtung 4 ist vorzugsweise fest am Höhenleitwerk 3 bzw. an der Höhenflosse 3b angeordnet, d.h. der Impeller selbst ist vorzugsweise nicht schwenkbar, so dass die Richtung der Antriebskraft A bezogen auf das Höhenleitwerk 3 und/oder die Höhenflosse 3a fest bzw. unveränderlich ist.

Bei einer alternativen Ausführung kann die als Impeller ausgebildete zweite Antriebseinrichtung 4 zwar ebenfalls fest am Höhenleitwerk 3 bzw. an der Höhenflosse 3b angeordnet sein, so dass der Impeller selbst nicht schwenkbar ist, jedoch kann im Bereich des unteren Endes des Gehäuses 10 und/oder des unteren Gehäuseabschnitts 14 zusätzlich eine Luftlenkeinrichtung 15 vorgesehen sein, durch welche die Stärke und/oder die Richtung des jeweils erzeugten Antriebs A veränderbar ist.

Die Luftlenkeinrichtung 15 weist im vorliegenden Beispiel ein sich in Richtung vom Impeller weg verjüngendes Rohr auf, das um eine senkrecht zur Zeichenebene verlaufende Schwenkachse S verschwenkt werden kann und dabei den senkrecht zur Höhenflosse 3b aus dem Impeller austretenden Luftstrom ablenken (durch strichpunktierte Pfeile angedeutet) und eine in ihrer Richtung entsprechend geänderte Antriebskraft A' bewirken kann.

Das vorstehend beschriebene Wirkprinzip der Luftlenkeinrichtung 15 wird im Zusammenhang mit der vorliegenden Offenbarung auch als Schubvektorsteuerung bezeichnet.

Alternativ oder zusätzlich zur verschwenkbaren und vorzugsweise als konisches bzw. sich verjüngendes Rohr ausgebildeten Luftlenkeinrichtung 15 kann eine Schubvektorsteuerung aber auch durch andere Maßnahmen realisiert werden, bei welchen ein Abgas- bzw. Luftstrahl der zweiten Antriebseinrichtung 2 gezielt gerichtet wird, etwa durch Strahlruder, Ablenkflächen an einem Düsen- bzw. Impelleraustritt oder Schwenken der Düse bzw. des Impellers selbst.

Auch wenn in der Darstellung der Fig. 5 die von der zweiten Antriebseinrichtung 4, insbesondere in Form eines Impellers, erzeugten Antriebskräfte A, A' nach oben gerichtet sind, kann die zweite Antriebseinrichtung 4 auch zur Erzeugung entgegengesetzt gerichteter, insbesondere nach unten gerichteter, Antriebskräfte eingerichtet sein, welche den beispielhaft eingezeichneten Antriebskräften A und A' entgegengesetzt gerichtet sind. Diese lassen sich leicht durch eine Umkehr der Rotationsrichtung des Propellers 12 der als Impeller ausgebildeten zweiten Antriebseinrichtung realisieren.

Grundsätzlich kann die zweite Antriebseinrichtung 4 dazu eingerichtet sein, Antriebskräfte in jeder beliebigen Richtung zu erzeugen.

Vorzugsweise können die von der zweiten Antriebseinrichtung 4 erzeugten Antriebskräfte nicht nur zum Auftrieb des Luftfahrzeugs beitragen, sondern auch zum Richtungswechsel und/oder zur Richtungsstabilisierung beim Vorwärts- und/oder Senkrechtflugmodus. So kann z.B. bei dem in Fig. 2b gezeigten zweiten Schwebemodus die Flugrichtung des Luftfahrzeugs in vertikaler Richtung stabilisiert werden, indem etwa durch Erzeugen von - in Zeichenebene betrachtet - nach rechts und/oder links gerichteten Antriebskräften ein "Ausbrechen" des Hecks nach links bzw. rechts verhindert wird.

Vorzugsweise kann eine, insbesondere wie vorstehend beschriebene, als Impeller ausgebildete zweite Antriebseinrichtung 4, optional zusammen mit einer Luftlenkeinrichtung 15, auch in einem oder in beiden Seitenflügeln 9 bzw. Seitenflossen integriert sein. Dies ist anhand des in Fig. 1 dargestellten Beispiels des Luftfahrzeugs veranschaulicht, bei welchem optional zwei als Impeller ausgebildete zweite Antriebseinrichtungen 4' in beiden Seitenflügeln 9 integriert sind. Die Antriebseinrichtungen 4' sind zur Erzeugung von Antriebskräften A" ausgebildet, welche senkrecht und/oder in einem einstellbaren bzw. vorgebbaren Winkel zur Längsachse L des Luftfahrzeugs gerichtet sind, was durch gestrichelte Doppelpfeile angedeutet ist, und vorzugsweise im Vorwärts- und/oder Senkrechtflugmodus zum Richtungswechsel und/oder zur Richtungsstabilisierung dienen. Dadurch kann z.B. bei dem in Fig. 2a, 2b und 2c gezeigten Senkrecht- bzw. Vorwärtsflugmodus die Flugrichtung des Luftfahrzeugs stabilisiert werden, indem etwa durch Erzeugen von entsprechenden seitlich gerichteten Antriebskräften ein "Ausbrechen" des Hecks zur Seite hin verhindert wird.

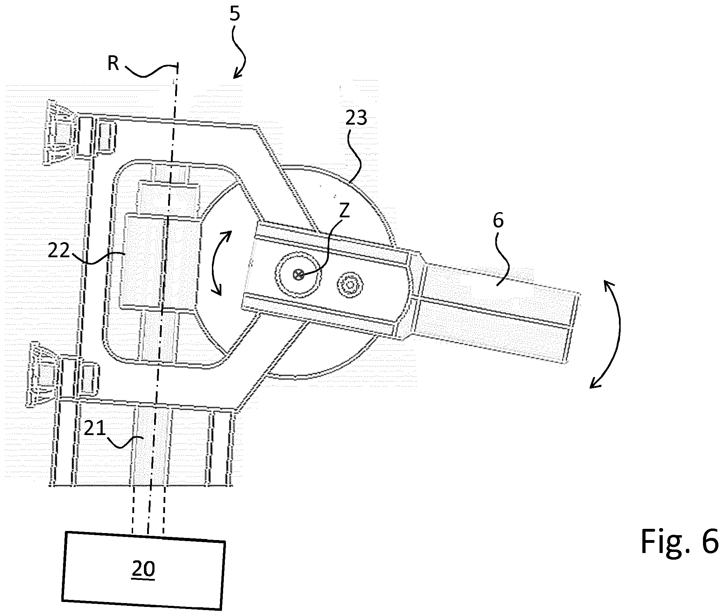

Figur 6 zeigt eine schematische Seitenansicht eines Beispiels einer Schwenkeinrichtung 5, über welche jeweils ein Trägerelement 6 am Rumpf 7 und/oder an der Tragfläche 1 des Luftfahrzeugs (siehe Fig. 1) schwenkbar gelagert ist.

Die Schwenkeinrichtung 5 weist eine Schwenkantriebseinheit 20, insbesondere in Form eines Motors, und ein Schwenkgetriebe auf, das im vorliegenden Beispiel eine von der Schwenkantriebseinheit 20 in Rotation um eine Rotationsachse R versetzbare Antriebswelle 21 aufweist, an welcher ein schraubenförmiges Getriebeelement 22, insbesondere in Form einer Schnecke, angebracht ist.

Ferner ist ein Zahnrad 23, insbesondere ein Kegelrad oder Schneckenrad, vorgesehen, welches um eine Zahnradachse Z, die im Wesentlichen senkrecht zur Rotationsachse R der Antriebswelle 22 und vorzugsweise entlang der Schwenkachse S1 (siehe Fig. 1) verläuft, drehbar gelagert ist und in das Gewinde des Getriebeelements 22 bzw. der Schnecke eingreift.

Wird das Getriebeelement 22 durch die vom Motor 20 angetriebene Antriebswelle 21 in Rotation um die Rotationsachse R versetzt, dann wird das Zahnrad 23 zusammen mit dem daran befestigten Trägerelement 6, je nach Richtung der Rotation, um die Zahnradachse Z geschwenkt, was durch die beiden Doppelpfeile angedeutet ist.

Vorzugsweise ist die Übersetzung der Rotationsbewegung um die Rotationsachse R zur Dreh- bzw. Schwenkbewegung des Zahnrades 23 um die Zahnradachse Z so groß gewählt, dass das Schwenkgetriebe selbsthemmend ist, d.h. dass das Zahnrad 23 und das daran befindliche Trägerelement 6 vorzugsweise nur durch eine Rotation der Antriebswelle 21 geschwenkt werden können, jedoch umgekehrt ein Rotieren der Antriebswelle 21 durch auf das Zahnrad 23 und/oder das Trägerelement 6 üblicherweise - d.h. insbesondere im Betrieb des Luftfahrzeugs - einwirkende Kräfte nicht oder nur innerhalb vorgegebener Toleranzen möglich ist.

Dadurch können die Trägerelemente 6 und das daran befindliche Höhenleitwerk 3 (siehe Fig. 1) auf einfache und robuste Weise relativ zum Rumpf 7 bzw. zur Tragfläche 1 geschwenkt und darüber hinaus zuverlässig in der jeweils eingenommenen Schwenkposition gehalten werden.

Auch wenn in dem in Fig. 6 gezeigten Beispiel ein Trägerelement 6 mithilfe der Schwenkeinrichtung 5 verschwenkt wird, kann die Schwenkeinrichtung 5 selbstverständlich auch dazu vorgesehen sein, den hinteren Rumpfabschnitt 7b zusammen mit dem daran angebrachten Höhenleitwerk 3 gegenüber dem vorderen Rumpfabschnitt 7a zu verschwenken.

Auch wenn in dem in Fig. 6 gezeigten Beispiel das Schwenkgetriebe vorzugsweise als Schneckengetriebe ausgebildet ist, kann das Schwenkgetriebe auch auf andere Weise realisiert werden.

Beispielsweise kann die Antriebswelle 21 als Gewindestange ausgebildet sein, auf welcher - anstelle der Schnecke 22 - eine Gewindemutter aufgefädelt ist, die mit dem um die Achse Z schwenkbar gelagerten Trägerelement 6 gekoppelt ist. Wird die Gewindestange durch den Motor 21 in Rotation um die Rotationsachse R versetzt, wird die Gewindemutter parallel zur Rotationsachse R verschoben, was zu einer Drehung des damit gekoppelten Trägerelements 6 führt. Auch bei dieser Ausführung kann die Übersetzung so groß gewählt werden, dass das Schwenkgetriebe selbsthemmend ist.

## Patentansprüche

1. Luftfahrzeug mit mindestens einem Rumpf (7), welcher einen vorderen Rumpfabschnitt (7a) und einen hinteren Rumpfabschnitt (7b) aufweist, mindestens einer im Bereich des vorderen Rumpfabschnitts (7a) vorgesehenen Tragfläche (1), mindestens einer im Bereich des vorderen Rumpfabschnitts (7a) und/oder an der Tragfläche (1) vorgesehenen ersten Antriebseinrichtung (2), welche dazu eingerichtet ist, einen Vortrieb und/oder Auftrieb zu erzeugen, mindestens einem Höhenleitwerk (3), welches dazu eingerichtet ist, das Luftfahrzeug während des Fluges um eine Querachse des Luftfahrzeugs zu drehen und/oder zu stabilisieren, wobei das Höhenleitwerk (3)
- am Rumpf (7) angebracht ist und der hintere Rumpfabschnitt (7b) gegenüber dem vorderen Rumpfabschnitt (7a) um eine zur Querachse des Luftfahrzeugs im Wesentlichen parallele Schwenkachse (S2) schwenkbar ist und/oder
- an mindestens einem am Rumpf (7) und/oder an der Tragfläche (1) gelagerten Trägerelement (6) angebracht ist, welches gegenüber dem Rumpf (7) bzw. der Tragfläche (1) um eine zur Querachse des Luftfahrzeugs im Wesentlichen parallele Schwenkachse (S1) schwenkbar ist,
mindestens einer am Höhenleitwerk (3) und/oder am hinteren Rumpfabschnitt (7b) und/oder an dem mindestens einen Trägerelement (6) vorgesehenen zweiten Antriebseinrichtung (4), welche dazu eingerichtet ist, einen Auftrieb zu erzeugen, und einer Steuerungseinrichtung (8), welche dazu eingerichtet ist, das Luftfahrzeug in einem ersten Schwebemodus, in welchem das Luftfahrzeug starten und/oder landen kann, so zu steuern, dass
- die Längsachse des Luftfahrzeugs (L) im Wesentlichen in vertikaler Richtung verläuft,
- der hintere Rumpfabschnitt (7b) bzw. das mindestens eine Trägerelement (6) in eine im Wesentlichen senkrecht zur Längsachse (L) des Luftfahrzeugs verlaufende Orientierung geschwenkt wird bzw. ist und
- der Auftrieb des Luftfahrzeugs durch die erste und zweite Antriebseinrichtung (2, 4) erzeugt wird,
**dadurch gekennzeichnet, dass** die Steuerungseinrichtung (8) ferner dazu eingerichtet ist, das Luftfahrzeug in einem zweiten Schwebemodus, in welchem das Luftfahrzeug starten und/oder landen kann, so zu steuern, dass
- die Längsachse (L) des Luftfahrzeugs im Wesentlichen in vertikaler Richtung verläuft,
- der hintere Rumpfabschnitt (7b) bzw. das mindestens eine Trägerelement (6) in eine im Wesentlichen parallel zur Längsachse (L) des Luftfahrzeugs verlaufende Orientierung geschwenkt wird bzw. ist und
- der Auftrieb des Luftfahrzeugs, insbesondere nur, durch die erste Antriebseinrichtung (2) erzeugt wird.

2. Luftfahrzeug nach Anspruch 1 mit mindestens einer Schwenkeinrichtung (5), welche dazu eingerichtet ist, den hinteren Rumpfabschnitt (7b) gegenüber dem vorderen Rumpfabschnitt (7a) und/oder das mindestens eine Trägerelement (6) gegenüber dem Rumpf (7) bzw. der Tragfläche (1) um die Schwenkachse (S1 bzw. S2) zu schwenken.

3. Luftfahrzeug nach Anspruch 2, wobei die Schwenkeinrichtung (5) dazu eingerichtet ist, den hinteren Rumpfabschnitt (7b) bzw. das mindestens eine Trägerelement (6) von einer ersten Orientierung in eine zweite Orientierung, welche zur ersten Orientierung im Wesentlichen senkrecht verläuft, zu schwenken.

4. Luftfahrzeug nach Anspruch 3, wobei der hintere Rumpfabschnitt (7b) bzw. das mindestens eine Trägerelement (6) in der ersten Orientierung im Wesentlichen parallel zur Längsachse (L) des Luftfahrzeugs und in der zweiten Orientierung im Wesentlichen senkrecht zur Längsachse (L) des Luftfahrzeugs verläuft.

5. Luftfahrzeug nach einem der Ansprüche 2 bis 4, wobei die Schwenkeinrichtung (5) eine Schwenkantriebseinheit (20), insbesondere einen Motor, und ein mit der Schwenkantriebseinheit (20) mechanisch gekoppeltes Schwenkgetriebe (21-23) aufweist, durch welches der hintere Rumpfabschnitt (7b) gegenüber dem vorderen Rumpfabschnitt (7a) und/oder das mindestens eine Trägerelement (6) gegenüber dem Rumpf (7) bzw. der Tragfläche (1) um die Schwenkachse (S1 bzw. S2) schwenkbar gelagert ist, wobei das Schwenkgetriebe (21-23) als selbsthemmendes Getriebe ausgebildet ist.

6. Luftfahrzeug nach Anspruch 5, wobei das Schwenkgetriebe (21-23) aufweist:
- ein schraubenförmiges Getriebeelement (22), insbesondere eine Schnecke, welches von der Schwenkantriebseinheit (20) in eine Drehbewegung um eine erste Drehachse (R) versetzt werden kann, und
- ein in das schraubenförmige Getriebeelement (22) eingreifendes Zahnrad (23), insbesondere ein Schneckenrad, welches durch eine Drehbewegung des Getriebeelements (22) um die erste Drehachse (R) um eine zur ersten Drehachse (R) im Wesentlichen senkrechten zweiten Drehachse (Z), welche insbesondere entlang der Schwenkachse (S1 bzw. S2) verläuft, drehbar ist.

7. Luftfahrzeug nach einem der vorangehenden Ansprüche, wobei die zweite Antriebseinrichtung (4) als Impeller ausgebildet ist, welcher in das am hinteren Rumpfabschnitt (7b) bzw. an dem mindestens einen Trägerelement (6) angebrachte Höhenleitwerk (3), insbesondere ortsfest, integriert ist.

8. Luftfahrzeug nach Anspruch 3, wobei die zweite Antriebseinrichtung (4) so angeordnet und/oder eingerichtet ist, dass die zweite Antriebseinrichtung (4) einen, insbesondere zusätzlichen, Auftrieb (A) erzeugt, wenn der hintere Rumpfabschnitt (7b) bzw. das mindestens eine Trägerelement (6) in der zweiten Orientierung im Wesentlichen senkrecht zur, insbesondere vertikal ausgerichteten, Längsachse (L) des Luftfahrzeugs verläuft bzw. orientiert ist.

9. Luftfahrzeug nach einem der vorangehenden Ansprüche, wobei die am Höhenleitwerk vorgesehene zweite Antriebseinrichtung (4) dazu eingerichtet ist, in mindestens einer Richtung eine Antriebskraft (A) zu erzeugen, und die zweite Antriebseinrichtung (4) durch Schwenken, insbesondere nur durch Schwenken, des hinteren Rumpfabschnitts (7b) zusammen mit dem daran angebrachten Höhenleitwerk (3) um die Schwenkachse (S2) bzw. des mindestens einen Trägerelements (6) zusammen mit dem daran angebrachten Höhenleitwerk (3) um die Schwenkachse (S1) in eine Position und/oder Orientierung bringbar ist, in welcher die Richtung der von der zweiten Antriebseinrichtung erzeugbaren Antriebskraft (A) im Wesentlichen der Richtung einer von der ersten Antriebseinrichtung (2) erzeugbaren Auftriebskraft entspricht, so dass sowohl von der ersten Antriebseinrichtung (2) als auch der zweiten Antriebseinrichtung (4) ein Auftrieb (A1) erzeugbar ist.

10. Luftfahrzeug nach einem der vorangehenden Ansprüche, wobei die erste Antriebseinrichtung (2) und/oder die zweite Antriebseinrichtung (4) eine Schubvektorsteuerung (15) aufweist bzw. aufweisen, durch welche die Stärke und/oder die Richtung des jeweils erzeugten Vortriebs bzw. Auftriebs (A, A') veränderbar ist bzw. sind.

11. Luftfahrzeug nach einem der vorangehenden Ansprüche mit einer Steuerungseinrichtung (8), welche dazu eingerichtet ist, das Luftfahrzeug in einem Vorwärtsflugmodus, in welchem das Luftfahrzeug vorwärts fliegen kann, so zu steuern, dass
- die Längsachse (L) des Luftfahrzeugs im Wesentlichen in horizontaler Richtung verläuft,
- der hintere Rumpfabschnitt (7b) bzw. das mindestens eine Trägerelement (6) in eine im Wesentlichen parallel zur Längsachse (L) des Luftfahrzeugs verlaufende erste Orientierung geschwenkt wird bzw. ist und
- der Vortrieb des Luftfahrzeugs, insbesondere nur, durch die erste Antriebseinrichtung (2) erzeugt wird und der Auftrieb des Luftfahrzeugs durch die Tragfläche (1) und das Höhenleitwerk (3) erzeugt wird.

12. Verfahren zum Betreiben eines Luftfahrzeugs, wobei das Luftfahrzeug aufweist: mindestens einen Rumpf (7), welcher einen vorderen Rumpfabschnitt (7a) und einen hinteren Rumpfabschnitt (7b) aufweist, mindestens eine im Bereich des vorderen Rumpfabschnitts (7a) vorgesehene Tragfläche (1), mindestens eine im Bereich des vorderen Rumpfabschnitts (7a) und/oder an der Tragfläche (1) vorgesehene erste Antriebseinrichtung (2), welche dazu eingerichtet ist, einen Vortrieb und/oder Auftrieb zu erzeugen, mindestens ein Höhenleitwerk (3), welches dazu eingerichtet ist, das Luftfahrzeug während des Fluges um eine Querachse des Luftfahrzeugs zu drehen und/oder zu stabilisieren, wobei - das Höhenleitwerk (3) am Rumpf (7) angebracht ist und der hintere Rumpfabschnitt (7b) gegenüber dem vorderen Rumpfabschnitt (7a) um eine zur Querachse des Luftfahrzeugs im Wesentlichen parallele Schwenkachse (S2) geschwenkt wird und/oder
- das Höhenleitwerk (3) an mindestens einem am Rumpf (7) und/oder an der Tragfläche (1) gelagerten Trägerelement (6) angebracht ist, welches gegenüber dem Rumpf (7) bzw. der Tragfläche (1) um eine zur Querachse des Luftfahrzeugs im Wesentlichen parallele Schwenkachse (S1) geschwenkt wird,
mindestens eine am Höhenleitwerk (3) und/oder am hinteren Rumpfabschnitt (7b) und/oder an dem mindestens einen Trägerelement (6) vorgesehene zweite Antriebseinrichtung (4), welche dazu eingerichtet ist, einen Auftrieb zu erzeugen, und eine Steuerungseinrichtung (8), welche das Luftfahrzeug in einem ersten Schwebemodus, in welchem das Luftfahrzeug starten und/oder landen kann, so steuert, dass
- die Längsachse des Luftfahrzeugs (L) im Wesentlichen in vertikaler Richtung verläuft,
- der hintere Rumpfabschnitt (7b) bzw. das mindestens eine Trägerelement (6) in eine im Wesentlichen senkrecht zur Längsachse (L) des Luftfahrzeugs verlaufende Orientierung geschwenkt wird bzw. ist und
- der Auftrieb des Luftfahrzeugs durch die erste und zweite Antriebseinrichtung (2, 4) erzeugt wird,
**dadurch gekennzeichnet, dass** die Steuerungseinrichtung (8) das Luftfahrzeug in einem zweiten Schwebemodus, in welchem das Luftfahrzeug starten und/oder landen kann, so steuert, dass
- die Längsachse (L) des Luftfahrzeugs im Wesentlichen in vertikaler Richtung verläuft,
- der hintere Rumpfabschnitt (7b) bzw. das mindestens eine Trägerelement (6) in eine im Wesentlichen parallel zur Längsachse (L) des Luftfahrzeugs verlaufende Orientierung geschwenkt wird bzw. ist und
- der Auftrieb des Luftfahrzeugs, insbesondere nur, durch die erste Antriebseinrichtung (2) erzeugt wird.

13. Verfahren nach Anspruch 12, wobei am Höhenleitwerk (3) eine zweite Antriebseinrichtung (4) vorgesehen ist, welche dazu eingerichtet ist, in einer Richtung eine Antriebskraft (A) zu erzeugen, und die zweite Antriebseinrichtung (4) durch Schwenken, insbesondere alleine durch Schwenken, des hinteren Rumpfabschnitts (7b) zusammen mit dem daran angebrachten Höhenleitwerk (3) um die Schwenkachse (S2) bzw. des mindestens einen Trägerelements (6) zusammen mit dem daran angebrachten Höhenleitwerk (3) um die Schwenkachse (S1) in eine Position und/oder Orientierung gebracht wird, in welcher die Richtung der von der zweiten Antriebseinrichtung (4) erzeugbaren und/oder erzeugten Antriebskraft (A) im Wesentlichen der Richtung einer von der ersten Antriebseinrichtung (2) erzeugbaren und/oder erzeugten Auftriebskraft entspricht, so dass sowohl von der ersten Antriebseinrichtung (2) als auch der zweiten Antriebseinrichtung (4) ein Auftrieb (A1) erzeugt werden kann bzw. wird.

## Claims

1. Aircraft comprising at least one fuselage (7), which has a front fuselage section (7a) and a rear fuselage section (7b), at least one wing (1) provided in the region of the front fuselage section (7a), at least one first drive device (2) provided in the region of the front fuselage section (7a) and/or on the wing (1) and configured to generate propulsion and/or lift, at least one tailplane (3) which is configured to rotate and/or stabilize the aircraft about a transverse axis of the aircraft during flight,
wherein the tailplane (3)
- is attached to the fuselage (7), and the rear fuselage section (7b) can be pivoted relative to the front fuselage section (7a) about a pivot axis (S2) which is substantially parallel to the transverse axis of the aircraft, and/or
- is attached to at least one support element (6) which is mounted on the fuselage (7) and/or on the wing (1) and which can be pivoted relative to the fuselage (7) and/or to the wing (1) about a pivot axis (S1) which is substantially parallel to the transverse axis of the aircraft,
at least one second drive device (4) provided on the tailplane (3) and/or on the rear fuselage section (7b) and/or on the at least one support element (6) and configured to generate lift, and a control device (8) configured to control the aircraft in a first hovering mode, in which the aircraft can take off and/or land, such that
- the longitudinal axis of the aircraft (L) is substantially vertical,
- the rear fuselage section (7b) or the at least one support element (6) is pivoted into a second orientation which is substantially perpendicular to the longitudinal axis (L) of the aircraft, and
- the lift of the aircraft is generated by the first and second drive device (2, 4), **characterized in that** the control device (8) is further configured to control the aircraft in a second hovering mode, in which the aircraft can take off and/or land, such that
- the longitudinal axis (L) of the aircraft is substantially vertical,
- the rear fuselage section (7b) or the at least one support element (6) is pivoted into a first orientation which is substantially parallel to the longitudinal axis (L) of the aircraft, and
- the lift of the aircraft is generated, in particular only, by the first drive device (2).

2. Aircraft according to claim 1, comprising at least one pivoting device (5), which is configured to pivot the rear fuselage section (7b) relative to the front fuselage section (7a) and/or the at least one support element (6) relative to the fuselage (7) or the wing (1) about the pivot axis (S1 resp. S2).

3. Aircraft according to claim 2, wherein the pivoting device (5) is configured to pivot the rear fuselage section (7b) or the at least one support element (6) from a first orientation to a second orientation which is substantially perpendicular to the first orientation.

4. Aircraft according to claim 3, wherein, in the first orientation, the rear fuselage section (7b) or the at least one support element (6) is substantially parallel to a longitudinal axis (L) of the aircraft, and, in the second orientation, the rear fuselage section (7b) or the at least one support element (6) is substantially perpendicular to the longitudinal axis (L) of the aircraft.

5. Aircraft according to one of claims 2 to 4, wherein the pivoting device (5) comprises a pivot drive unit (20), in particular a motor, and a pivot gear (21-23) mechanically coupled to the pivot drive unit (20), by means of which the rear fuselage section (7b) is pivotable relative to the front fuselage section (7a) and/or the at least one carrier element (6) is pivotable relative to the fuselage (7) and/or the wing (1) about the pivot axis (S1 resp. S2), the pivot gear (21-23) being designed as a self-locking gear.

6. Aircraft according to claim 5, wherein the pivot gear (21-23) comprises:
- a helical gear element (22), in particular a worm, which can be set into a rotational movement about a first axis of rotation (R) by the pivot drive unit (20), and
- a gear wheel (23), in particular a worm wheel, which engages in the helical gear element (22)and can be rotated by a rotary movement of the gear element (22) about the first axis of rotation (R) about a second axis of rotation (Z) which is substantially perpendicular to the first axis of rotation (R) and which preferably runs along the pivot axis (S1 resp. S2).

7. Aircraft according to one of the preceding claims, wherein the second drive device (4) is designed as an impeller which is, in particular fixedly, integrated into the tailplane (3) attached to the rear fuselage section (7b) or to the at least one support element (6).

8. Aircraft according to claim 3, wherein the second drive device (4) is arranged and/or configured such that the second drive device (4) generates a lift (A), in particular an additional lift (A), if in the second orientation the rear fuselage section (7b) or the at least one carrier element (6) runs or is oriented substantially perpendicular to the, in particular vertically oriented, longitudinal axis (L) of the aircraft.

9. Aircraft according to one of the preceding claims, wherein the second drive device (4) provided on the tailplane is configured to generate a drive force (A) in at least one direction, and, by pivoting, in particular only by pivoting,
the rear fuselage section (7b) together with the tailplane (3) attached thereto about the pivot axis (S2) or
the at least one carrier element (6) together with the tailplane (3) attached thereto about the pivot axis (S1),
the second drive device (4) can be brought into a position and/or orientation in which the direction of the drive force (A) which can be generated by the second drive device substantially corresponds to the direction of a lift force which can be generated by the first drive device (2), so that a lift (A1) can be generated by both the first drive device (2) and the second drive device (4).

10. Aircraft according to one of the preceding claims, wherein the first drive device (2) and/or the second drive device (4) has or have a thrust vector control (15) by which the strength and/or the direction of the respectively generated propulsion or lift (A, A') can be varied.

11. Aircraft according to any one of the preceding claims, comprising a control device (8) configured to control the aircraft in a forward flight mode, in which the aircraft can fly forward, such that
- the longitudinal axis (L) of the aircraft is substantially horizontal,
- the rear fuselage section (7b) or the at least one support element (6) is pivoted into a first orientation which is substantially parallel to the longitudinal axis (L) of the aircraft, and
- the propulsion of the aircraft is generated, in particular only, by the first drive device (2), and the lift of the aircraft is generated by the wing (1) and the tailplane (3).

12. Method for operating an aircraft, the aircraft comprising: at least one fuselage (7), which has a front fuselage section (7a) and a rear fuselage section (7b), at least one wing (1) provided in the region of the front fuselage section (7a), at least one first drive device (2) provided in the region of the front fuselage section (7a) and/or on the wing (1) and configured to generate a propulsion and/or lift, at least one tailplane (3) which is configured to rotate and/or stabilize the aircraft about a transverse axis of the aircraft during flight,
wherein
- the tailplane (3) is attached to the fuselage (7), and the rear fuselage section (7b) is pivoted relative to the front fuselage section (7a) about a pivot axis (S2) which is substantially parallel to the transverse axis of the aircraft and/or
- the tailplane (3) is attached to at least one support element (6) which is mounted on the fuselage (7) and/or on the wing (1) and which is pivoted relative to the fuselage (7) and/or the wing (1) about a pivot axis (S1) which is substantially parallel to the transverse axis of the aircraft
at least one second drive device (4) provided on the tailplane (3) and/or on the rear fuselage section (7b) and/or on the at least one support element (6) and configured to generate lift, and a control device (8) which controls the aircraft in a first hovering mode, in which the aircraft can take off and/or land, such that
- the longitudinal axis of the aircraft (L) is substantially vertical,
- the rear fuselage section (7b) or the at least one support element (6) is pivoted into a second orientation which is substantially perpendicular to the longitudinal axis (L) of the aircraft, and
- the lift of the aircraft is generated by the first and second drive device (2, 4), **characterized in that** the control device (8) controls the aircraft in a second hovering mode, in which the aircraft can take off and/or land, such that
- the longitudinal axis (L) of the aircraft is substantially vertical,
- the rear fuselage section (7b) or the at least one support element (6) is pivoted into a first orientation which is substantially parallel to the longitudinal axis (L) of the aircraft, and
- the lift of the aircraft is generated, in particular only, by the first drive device (2).

13. Method according to claim 12, wherein a second drive device (4) is provided on the tailplane (3) and configured to generate a drive force (A) in one direction, and, by pivoting, in particular only by pivoting,
- the rear fuselage section (7b) together with the tailplane (3) attached thereto about the pivot axis (S2) and/or
- the at least one carrier element (6) together with the tailplane (3) attached thereto about the pivot asxis (S1),
the second drive device (4) is brought into a position and/or orientation in which the direction of the drive force (A) which can be generated and/or is generated by the second drive device (4) substantially corresponds to the direction of a lift force which can be generated and/or is generated by the first drive device (2), so that a lift (A1) can be or is generated by both the first drive device (2) and the second drive device (4).

## Revendications

1. Aéronef comprenant au moins un fuselage (7) qui comporte une portion de fuselage avant (7a) et une portion de fuselage arrière (7b), au moins une surface portante (1) prévue dans la région de la portion de fuselage avant (7a), au moins un premier dispositif d'entraînement (2) qui est prévu dans la région de la portion de fuselage avant (7a) et/ou au niveau de la surface portante (1) et qui est conçu pour générer une propulsion et/ou une sustentation, au moins un empennage de profondeur (3) qui est conçu pour faire tourner et/ou stabiliser l'aéronef pendant le vol sur un axe transversal de l'aéronef, l'empennage de profondeur (3)
- étant monté sur le fuselage (7) et la portion de fuselage arrière (7b) pouvant pivoter par rapport à la portion de fuselage avant (7a) sur un axe de pivotement (S2) sensiblement parallèle à l'axe transversal de l'aéronef, et/ou
- étant monté sur au moins un élément porteur (6) qui est monté sur le fuselage (7) et/ou sur la surface portante (1) et qui peut pivoter par rapport au fuselage (7) ou à la surface portante (1) sur un axe de pivotement (S1) sensiblement parallèle à l'axe transversal de l'aéronef,
au moins un deuxième dispositif d'entraînement (4) qui est prévu au niveau de l'empennage de profondeur (3) et/ou de la portion de fuselage arrière (7b) et/ou de l'au moins un élément porteur (6) et qui est conçu pour générer une sustentation, et un dispositif de commande (8) qui est conçu pour commander l'aéronef dans un premier mode planant, dans lequel l'aéronef peut décoller et/ou atterrir, de telle manière que
- l'axe longitudinal de l'aéronef (L) s'étende sensiblement dans la direction verticale,
- la portion de fuselage arrière (7b) ou l'au moins un élément porteur (6) soit en cours de pivotement ou soit dans un état pivoté suivant une orientation qui s'étend sensiblement perpendiculairement à l'axe longitudinal (L) de l'aéronef, et
- la sustentation de l'aéronef soit générée par le premier et le deuxième dispositif d'entraînement (2, 4), **caractérisé en ce que** le dispositif de commande (8) étant en outre conçu pour commander l'aéronef dans un deuxième mode planant, dans lequel l'aéronef peut décoller et/ou atterrir, de telle manière que
- l'axe longitudinal (L) de l'aéronef s'étende sensiblement la direction verticale,
- la portion de fuselage arrière (7b) ou l'au moins un élément porteur (6) soit en cours de pivotement ou soit dans un état pivoté suivant une orientation qui s'étend sensiblement parallèlement à l'axe longitudinal (L) de l'aéronef, et
- la sustentation de l'aéronef soit générée, en particulier uniquement, par le premier dispositif d'entraînement (2).

2. Aéronef selon la revendication 1 comprenant au moins un dispositif de pivotement (5) qui est conçu pour faire pivoter la portion de fuselage arrière (7b) par rapport à la portion de fuselage avant (7a) et/ou l'au moins un élément porteur (6) par rapport au fuselage (7) ou à la surface portante (1) sur l'axe de pivotement (S1 ou S2).

3. Aéronef selon la revendication 2, dans lequel le dispositif de pivotement (5) est conçu pour faire pivoter la portion de fuselage arrière (7b) ou l'au moins un élément porteur (6) d'une première orientation dans une deuxième orientation qui s'étend sensiblement perpendiculairement à la première orientation.

4. Aéronef selon la revendication 3, dans lequel la portion de fuselage arrière (7b) ou l'au moins un élément porteur (6) s'étend suivant la première orientation sensiblement parallèlement à l'axe longitudinal (L) de l'aéronef et suivant la deuxième orientation sensiblement perpendiculairement à l'axe longitudinal (L) de l'aéronef.

5. Aéronef selon l'une des revendications 2 à 4, dans lequel le dispositif de pivotement (5) comporte une unité d'entraînement et de pivotement (20), en particulier un moteur, et une transmission de pivotement (21 à 23) qui est accouplée mécaniquement à l'unité d'entraînement et de pivotement (20) et par le biais de laquelle la portion de fuselage arrière (7b) est montée de manière pivotante par rapport à la portion de fuselage avant (7a), et/ou l'au moins un élément porteur (6) est monté de manière pivotante par rapport au fuselage (7) ou à la surface portante (1), sur l'axe de pivotement (S1 ou S2), la transmission de pivotement (21-23) étant conçue comme une transmission autobloquante.

6. Aéronef selon la revendication 5, dans lequel la transmission de pivotement (21-23) comporte :
- un élément de transmission hélicoïdal (22), en particulier une vis sans fin qui peut être mis en mouvement de rotation sur un premier axe de rotation (R) par l'unité d'entraînement et de pivotement (20), et
- une roue dentée (23) qui s'engage dans l'élément de transmission hélicoïdal (22), en particulier une roue à vis sans fin et qui peut tourner, par un mouvement de rotation de l'élément de transmission (22) sur le premier axe de rotation (R), sur un deuxième axe de rotation (Z) qui s'étend notamment le long de l'axe de pivotement (S1 ou S2).

7. Aéronef selon l'une des revendications précédentes, dans lequel le deuxième dispositif d'entraînement (4) est réalisé sous la forme d'une roue à aubes qui est intégrée, notamment de manière fixe, dans l'empennage de profondeur (3) monté sur la portion de fuselage arrière (7b) ou sur l'au moins un élément porteur (6).

8. Aéronef selon la revendication 3, dans lequel le deuxième dispositif d'entraînement (4) est disposé et/ou conçu de telle sorte que le deuxième dispositif d'entraînement (4) génère une sustentation (A), notamment supplémentaire, lorsque la portion de fuselage arrière (7b) ou l'au moins un élément porteur (6) s'étend ou est orienté suivant la deuxième orientation sensiblement perpendiculairement à l'axe longitudinal (L), en particulier orienté verticalement, de l'aéronef.

9. Aéronef selon l'une des revendications précédentes, dans lequel le deuxième dispositif d'entraînement (4) prévu sur l'empennage de profondeur est conçu pour générer une force d'entraînement (A) dans au moins une direction, et le deuxième dispositif d'entraînement (4) peut être amené par pivotement, en particulier uniquement par pivotement, de la portion de fuselage arrière (7b) sur l'axe de pivotement (S2) conjointement avec l'empennage de profondeur (3) qui est monté dessus, ou de l'au moins un élément de support (6) sur l'axe de pivotement (S1) conjointement avec l'empennage de profondeur (3) qui est monté dessus, jusque dans une position et/ou une orientation dans lesquelles la direction de la force d'entraînement (A) qui peut être générée par le deuxième dispositif d'entraînement correspond sensiblement à la direction d'une force de sustentation qui peut être générée par le premier dispositif d'entraînement (2), de sorte qu'une sustentation (A1) peut être générée aussi bien par le premier dispositif d'entraînement (2) que par le deuxième dispositif d'entraînement (4).

10. Aéronef selon l'une des revendications précédentes, dans lequel le premier dispositif d'entraînement (2) et/ou le deuxième dispositif d'entraînement (4) comportent une commande de vecteur de poussée (15) permettant de faire varier l'intensité et/ou la direction de la propulsion ou la sustentation (A, A') respectivement générée.

11. Aéronef selon l'une des revendications précédentes comprenant un dispositif de commande (8) qui est conçu pour commander l'aéronef dans un mode de vol vers l'avant dans lequel l'aéronef peut voler vers l'avant de telle sorte que
- l'axe longitudinal (L) de l'aéronef s'étende sensiblement dans la direction horizontale,
- la portion de fuselage arrière (7b) ou l'au moins un élément porteur (6) soit en cours de pivotement ou soit dans un état pivoté suivant une première orientation qui s'étend sensiblement parallèlement à l'axe longitudinal (L) de l'aéronef, et
- la propulsion de l'aéronef soit générée, en particulier uniquement, par le premier dispositif d'entraînement (2) et la sustentation de l'aéronef soit générée par la surface portante (1) et l'empennage de profondeur (3).

12. Procédé d'exploitation d'un aéronef, dans lequel l'aéronef comporte : au moins un fuselage (7) qui comporte une portion de fuselage avant (7a) et une portion de fuselage arrière (7b), au moins une surface portante (1) prévue dans la région de la portion de fuselage avant (7a), au moins un premier dispositif d'entraînement (2) qui est prévu dans la région de la portion de fuselage avant (7a) et/ou au niveau de la surface portante (1) et qui est conçu pour générer une propulsion et/ou une sustentation, au moins un empennage de profondeur (3) qui est conçu pour faire tourner et/ou stabiliser l'aéronef pendant le vol sur un axe transversal de l'aéronef, l'empennage de profondeur (3) étant monté sur le fuselage (7) et la portion de fuselage arrière (7b) pouvant pivoter par rapport à la portion de fuselage avant (7a) sur un axe de pivotement (S2) sensiblement parallèle à l'axe transversal de l'aéronef et/ou
- l'empennage de profondeur (3) étant monté sur au moins un élément porteur (6) qui est monté sur le fuselage (7) et/ou sur la surface portante (1) et qui peut pivoter par rapport au fuselage (7) ou à la surface portante (1) sur un axe de pivotement (S1) sensiblement parallèle à l'axe transversal de l'aéronef,
au moins un deuxième dispositif d'entraînement (4) qui est prévu au niveau de l'empennage de profondeur (3) et/ou de la portion de fuselage arrière (7b) et/ou de l'au moins un élément porteur (6) et qui est conçu pour générer une sustentation, et un dispositif de commande (8) qui commande l'aéronef dans un premier mode planant, dans lequel l'aéronef peut décoller et/ou atterrir, de telle manière que
- l'axe longitudinal de l'aéronef (L) s'étende sensiblement dans la direction verticale,
- la portion de fuselage arrière (7b) ou l'au moins un élément porteur (6) soit en cours de pivotement ou soit dans un état pivoté suivant une orientation qui s'étend sensiblement perpendiculairement à l'axe longitudinal (L) de l'aéronef, et
- la sustentation de l'aéronef soit générée par le premier et le deuxième dispositif d'entraînement (2, 4),
**caractérisé en ce que** le dispositif de commande (8) commandant l'aéronef dans un deuxième mode planant, dans lequel l'aéronef peut décoller et/ou atterrir, de telle manière que
- l'axe longitudinal (L) de l'aéronef s'étende sensiblement la direction verticale,
- la portion de fuselage arrière (7b) ou l'au moins un élément porteur (6) soit en cours de pivotement ou soit dans un état pivoté suivant une orientation qui s'étend sensiblement parallèlement à l'axe longitudinal (L) de l'aéronef, et
- la sustentation de l'aéronef soit générée, en particulier uniquement, par le premier dispositif d'entraînement (2).

13. Procédé selon la revendication 12, dans lequel sur l'empennage de profondeur (3), un deuxième dispositif d'entraînement (4) est prévu qui est conçu pour générer une force d'entraînement (A) dans une direction, et le deuxième dispositif d'entraînement (4) est amené par pivotement, en particulier uniquement par pivotement, de la portion de fuselage arrière (7b) sur l'axe de pivotement (S2) conjointement avec l'empennage de profondeur (3) qui est monté dessus, ou de l'au moins un élément de support (6) sur l'axe de pivotement (S1) conjointement avec l'empennage de profondeur (3) qui est monté dessus, jusque dans une position et/ou une orientation dans lesquelles la direction de la force d'entraînement (A) qui peut être et/ou est générée par le deuxième dispositif d'entraînement (4) correspond sensiblement à la direction d'une force de sustentation qui peut être et/ou est générée par le premier dispositif d'entraînement (2), de sorte qu'une sustentation (A1) peut être ou est générée aussi bien par le premier dispositif d'entraînement (2) que par le deuxième dispositif d'entraînement (4).
